(19) Europäisches Patentamt
European Patent Office
Office européen des brevets

(11) Veröffentlichungsnummer: **0 269 155 B1**

# (12) EUROPÄISCHE PATENTSCHRIFT

(45) Veröffentlichungstag der Patentschrift: **10.04.91**

(51) Int. Cl.5: **G11B 15/10**

(21) Anmeldenummer: **87202090.4**

(22) Anmeldetag: **30.10.87**

---

(54) **Schaltmechanismus für ein Magnetband-Kassettengerät.**

---

(30) Priorität: **03.11.86 DE 3637323**

(43) Veröffentlichungstag der Anmeldung:
**01.06.88 Patentblatt 88/22**

(45) Bekanntmachung des Hinweises auf die
Patenterteilung:
**10.04.91 Patentblatt 91/15**

(84) Benannte Vertragsstaaten:
**DE FR GB IT**

(56) Entgegenhaltungen:
**DE-A- 3 401 645**
**DE-A- 3 422 259**
**DE-A- 3 435 101**
**US-A- 4 611 254**

(73) Patentinhaber: **Philips Patentverwaltung GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)FR GB IT**

(72) Erfinder: **Kunze, Norbert**
**Mozartstrasse 7**
**W-6332 Ehringshausen(DE)**

(74) Vertreter: **Kupfermann, Fritz-Joachim, Dipl.-Ing. et al**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

EP 0 269 155 B1

**Beschreibung**

Die Erfindung bezieh sich auf einen Schaltmechanismus für ein Magnetband-Kassettengerät mit einer gegenüber dem Magnetband vor und zurück verfahrenden Kopfplatte, die in der Arbeitslage vorgefahren verriegelbar wieder entriegelbar und zurückfahrbar ist in eine Ruhelage, und mit einer Bedienungsstange für das Bedienen einer Gerätefunktion, die in der betätigten Lage verriegelbar ist mittels eines Verriegelungsmechanismus, wobei ein Bandstop-Detektionsmechanismus für die Entriegelung der Kopfplatte vorgesehen ist, der bei Bandstop in eine Betriebslage gebracht wird, aus der heraus er bereits vor dem Entriegeln der Kopfplatte eine Verstellkraft auf diese ausübt, und wobei der Verriegelungsmechanismus für die Bedienungsstange ein mehrarmiger Schwenkhebel ist, wobei einer der Arme ein Verriegelungsarm ist.

Aus der DE-OS 34 22 259 (PHD 84-090) ist ein Schaltmechanismus für Schnellspulstangen eines Magnetband-Kassettengerätes bekannt. Diese Schnellspulstangen werden bei ihrem tiefen Eindrücken in der eingedrückten Stellung mittels eines Verriegelungsmechanismus verriegelt. Sind die Schnellspulstangen in eine verriegelte Lage gebracht, dann ist gleichzeitig die Kopfplatte aus der Arbeitslage ein wenig gegen Federkraft zurückgeschoben. Die Kopfplatte ist in dieser ein wenig zurückgeschobenen Stellung gegen ein völliges Zurückfahren in ihre Ruhelage verriegelt. Zur Verriegelung der Kopfplatte dient ein zweiter Verriegelungsmechanismus. Beide Verriegelungsmechanismen sind unabhängig voneinander separat verriegelt. Beim Entriegeln werden sie jedoch miteinander gekuppelt. Bei Bandstop übt der Bandstop-Mechanismus eine entkuppelnde Kraft und Entkupplungsbewegung zunächst auf den Verriegelungsmechanismus der Kopfplatte aus. Durch die Kupplung zwischen diesem Verriegelungsmechanismus und dem der Schnellstop-Taste wird nach dem Entriegeln des Verriegelungsmechanismus für die Kopfplatte über diesen auch der Verriegelungsmechanismus für die Schnellstop-Stange entriegelt. Der Ablauf des Entriegelns des Verriegelungsmechanismus für die Kopfplatte dauert relativ lange, weil der Bandstop-Mechanismus mit einer Kurvenscheibe arbeitet. Diese Kurvenscheibe muß zum Entriegeln einmal eine volle Umdrehung gemacht haben.

Die Kopfplatte wird unter Zwischenschaltung einer relativ starken Feder mittels eines Verstellelementes in ihre Arbeitsstellung geschoben. Durch die Betätigung der Schnellspulstange wird die Kopfplatte unter Vorspannung dieser Feder ein wenig aus der Arbeitslage zurückgeschoben. Diese Vorspannung belastet das Antriebssystem über die Kurvenscheibe und das Schwungrad bis hin zum Motor. Die Vorspannkraft der auf die Kopfplatte drückenden Feder wird durch das gekuppelte Zusammenwirken der beiden Verriegelungsmechanismen noch erhöht. Bei niedrigen Temperaturen, in denen Fette oder auf Gleitflächen miteinander zusammenarbeitende Teile des Gerätes immer steifer werden, wirkt sich die Federbelastung und die gegenseitige Kupplung so weit aus, daß der Bandstop-Mechanismus in den Grenzbereich seiner Funktion kommt.

Es ist Aufgabe der Erfindung, einen Schaltmechanismus der eingangs erwähnten Art derart zu verbessern, daß das Entriegeln der Bedienungsstange unter Umgehung des Verriegelungsmechanismus für die Kopfplatte durch ein Verstellen der Kopfplatte möglich wird.

Die gestellte Aufgabe ist erfindungsgemäß dadurch gelöst, daß der Verriegelungsmechanismus ein als weiterer Arm des Schwenkhebels ausgeführtes Verstellelement aufweist, das in verriegelter Lage des Verriegelungsmechanismus im Verstellweg der Kopfplatte zwischen Arbeits- und Ruhelage liegt, das infolge der Verstellkraft des Bandstop-Detektionsmechanismus auf die Kopfplatte von einem Betätigungselement der Kopfplatte angestoßen wird, und das den Schwenkhebel beim Anstoßen in eine Entriegelungslage überfürt, wodurch eine Entriegelung des Verriegelungsmechanismus und damit der Bedienungsstange vor dem Entriegeln der Kopfplatte erfolgt.

Da das Entriegeln des Verriegelungsmechanismus für die Bedienungsstange bereits vor dem Entriegeln des Verriegelungsmechanismus für die Kopfplatte stattfindet, ist der Entriegelungszeitraum für die Bedienungsstange wesentlich verringert. Die starke Belastung des Bandstop-Detektionsmechanismus und damit des Antriebs wird damit wesentlich verringert. Das Abschalten des Schnellspulens kann damit auch bei niedrigen Temperaturen sicher und schnell erfolgen.

Das Verstellelement kann zusammen mit dem Schwenkhebel einstückig ausgeführt werden, vorzugsweise in Form eines Kunststoff-Spritzteiles. Der Aufbau des Schaltmechanismus läßt sich damit wirtschaftlich ausführen.

Nach einer weiteren Ausgestaltung der Erfindung, bei der das Bedienungselement der Kopfplatte ein Stift auf der Kopfplatte ist, mit dem die Kopfplatte bei Betätigung der Bedienungsstange in eine verriegelte Zwischenstellung zwischen Arbeits- und Ruhelage bewegbar ist, ist vorgesehen, daß der Stift in der Zwischenstellung der Kopfplatte angrenzend an einem Anschlagteil des weiteren Schwenkhebelarmes liegt. Sobald der Bandstop-Detektionsmechanismus eine Verstellkraft auf die Kopfplatte ausübt, kann damit der Schwenkhebel angestoßen und in seine entriegelnde Stellung gebracht werden. Die Entriegelung findet damit gleich beim Überführen des Banddetektionsmechanismus in seine Betriebslage statt.

Nach einer weiteren Ausgestaltung der Erfindung, bei der in der Zwischenstellung der Kopfplatte der Stift über Federkraft an einer Betätigungskante der Bedienungsstange anliegt, ist vorgesehen, daß der Stift in der Zwischenstellung zwischen Betätigungskante und Anschlagteil liegt. Damit ist eine unmittelbare Kontaktgabe zwischen Stift und Schwenkhebel sichergestellt.

Bei der bekannten Ausführungsform des Schaltmechanismus sind an der Kopfplatte in einem Abstand voneinander zwei Stifte vorgesehen, die beide gleichzeitig mit Betätigungskanten der Bedienungsstange zusammenwirken, wobei der Bandstop-Detektionsmechanismus in der Betriebslage versucht, die Kopfplatte um einen der Stifte zu verdrehen.

In weiterer Ausgestaltung der Erfindung ist vorgesehen, daß der weitere Schwenkhebelarm zum Entriegeln des Entriegelungsmechanismus von dem anderen Stift angestoßen wird. Die Drehbewegung der Kopfplatte wird damit ausgenutzt, um den Verriegelungsmechanismus der Bedienungsstange zu entriegeln.

Die Erfindung wird anhand der Zeichnungen näher erläutert. Es zeigen:

Fig. 1 eine Ansicht des Magnetband-Kassettengerätes von der Antriebsseite her, wobei sich das Geräte in seiner Ruhelage befindet, d. h. es ist keine Kassette eingeschoben,

Fig. 2 das Magnetband-Kassettengerät von der Kopfseite her gesehen bei herausgenommener Kassette, wie in Fig. 1,

Fig. 3 das Magnetband-Kassettengerät mit der Kopfplatte in der Arbeitslage, d. h. bei eingeschobener Kassette,

Fig. 4 einen Teil des Magnetband-Kassettengerätes von der Antriebsseite her gesehen mit einer eingedrückten verriegelten Bedienungsstange in dem Moment, in dem der Bandstop-Detektionsmechanismus in seine Betriebslage überführt wird.

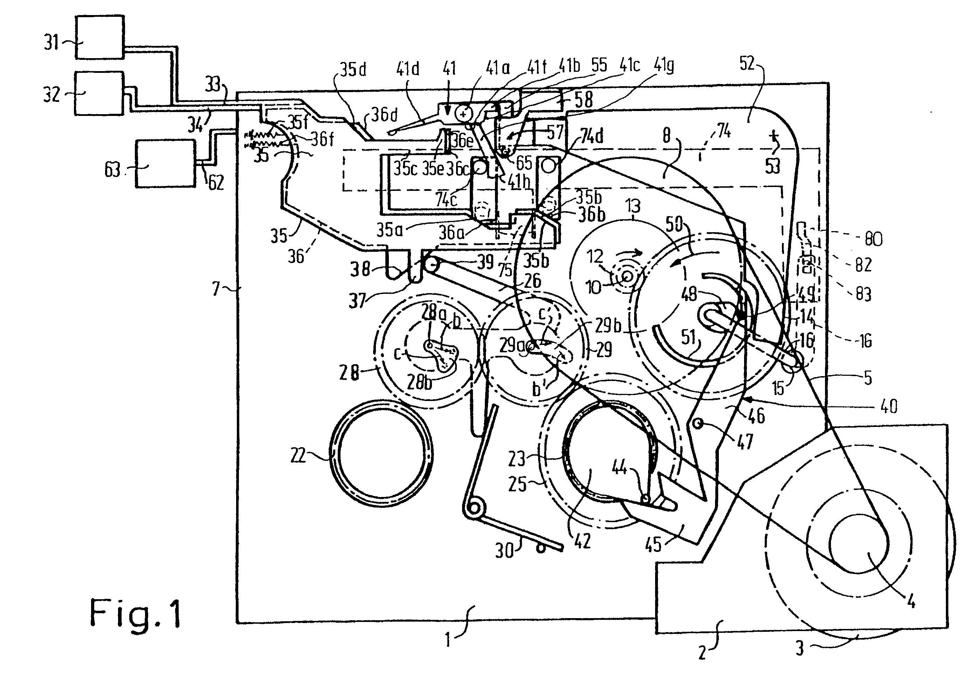

Das in Fig. 1 dargestellte Magnetbandkassettengerät weist ein Gestell 1 auf, das über eine Stütze 2 einen nur in einer Richtung umlaufenden Antriebsmotor 3 trägt. Das Antriebsritzel 4 des Motors 3 führt eine Peese 5, die auch über eine Schwungscheibe 8 geführt ist. Die Schwungscheibe 8 ist im Gestell 1 gelagert und ist fest verbunden mit einer Tonwelle 10. Weiterhin ist die Schwungscheibe 8 mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig.

1 dargestellten Schwenkarm 16, auf dem drehbar das Schaltrad 14 gelagert ist.

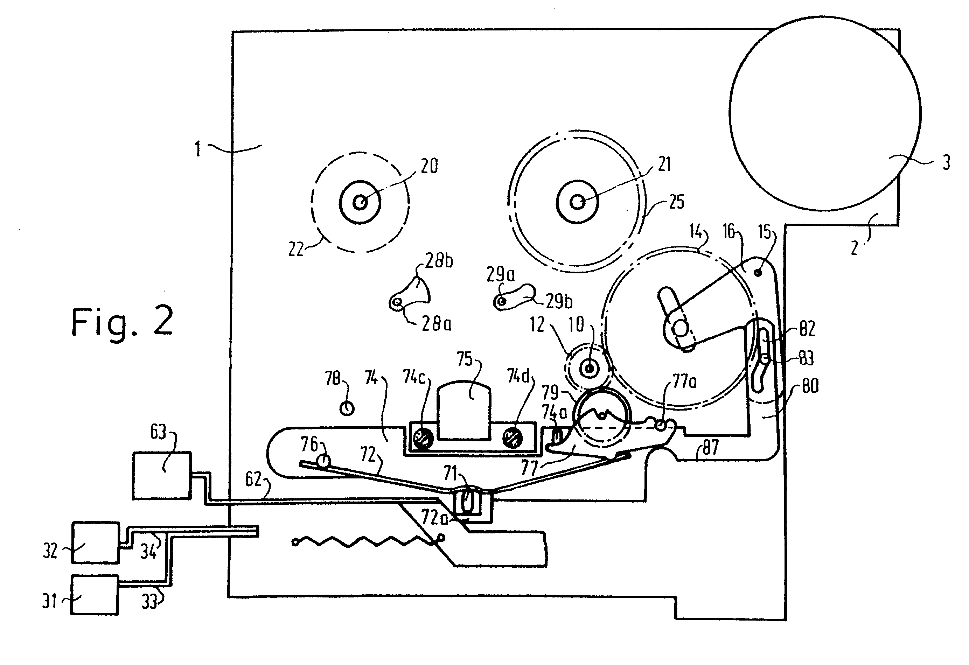

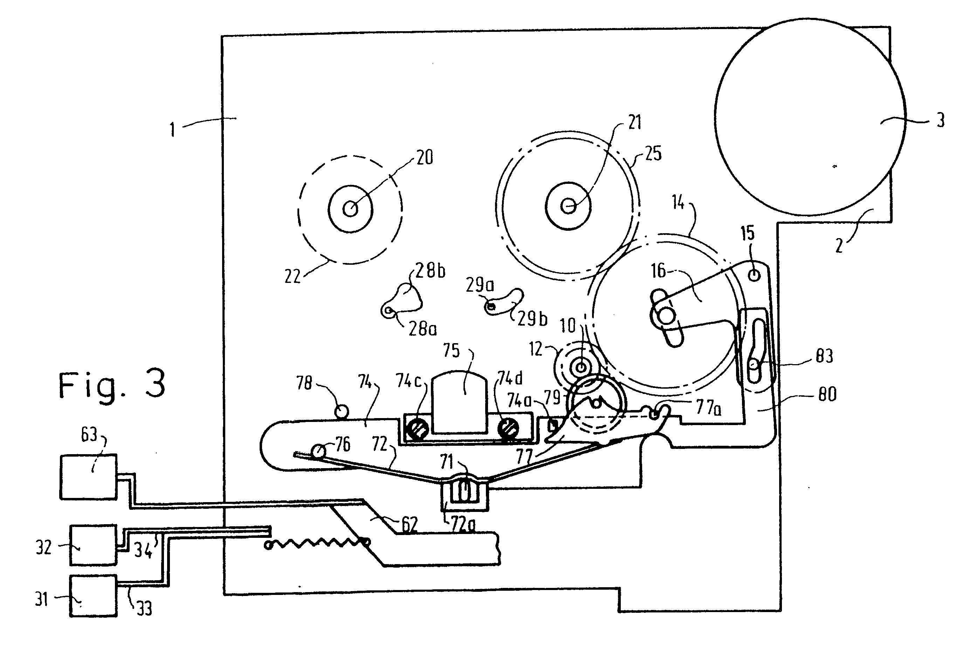

Wie auch in Fig. 2 und 3 dargestellt, sind drehbar im Gestell 1 Wickeldorne 20 und 21 gelagert. Diese Wickeldorne 20 und 21 sind fest verbunden mit Schnellspulrädern 22, 23. Über eine Rutschkupplung ist mit dem Wickeldorn 21 ein Spielrad 25 verbunden.

In Fig. 3 ist dargestellt, wie das Spielrad 25 über das Schaltrad 14 von dem Zahnrad 12 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei Vor- bzw. Rücklauftasten 31 und 32 vorgesehen. Über Tastenstangen 33 und 34 sind diese Tasten 31, 32 mit Schiebern 35, 36 verbunden. Diese Schieber 35 und 36 wirken auf den Bügel 26 ein. Dazu ist der Schieber 35 mit einem Ansatz 37 versehen; der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die auf Stifte 74c, 74d einer Kopfplatte 74 (Fig. 1, 2 und 3) arbeiten können.

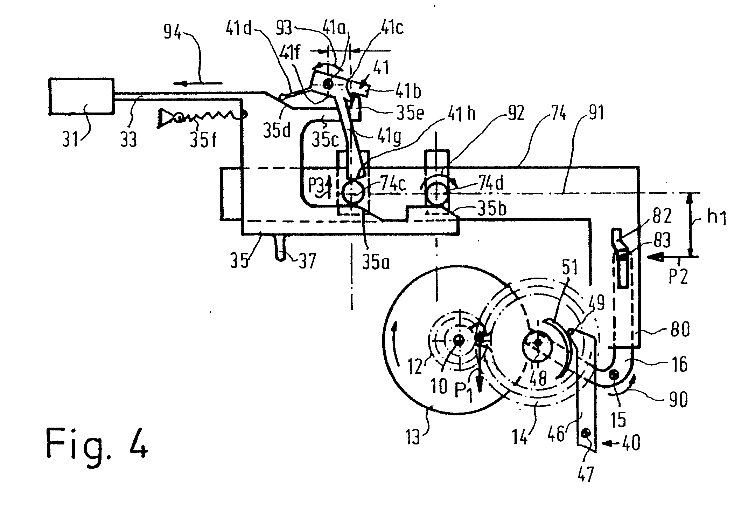

Die Schieber 35, 36 sind jeder für sich in der eingeschobenen Stellung verriegelbar (vergl. Fig. 4). Der Einfachheit halber ist in Fig. 4 nur der Schieber 35 dargestellt. Die Schieber 35, 36 tragen Rastlaschen 35c, 36c. Diese Rastlaschen 35c, 36c haben jeweils schräge Auflaufflächen 35d, 36d und im Abstand davon Rastnasen 35e, 36e. Im folgenden wird, da beide Laschen 35c, 36c gleich ausgebildet sind, nur noch die Lasche 35c in ihrer Funktionsweise beschrieben. Beide Schieber 35 und 36 werden mit Hilfe von Federn 35f und 36f in die Ausgangslage zurückgezogen, wenn dies nach einer Entrastung möglich ist. Zur Verriegelung der Schieber 35, 36 dient ein für beide gemeinsamer mehrarmiger Schwenkhebel 41, der um eine Achse 41a schwenkbar ist. Der mehrarmige Schwenkhebel 41, der vorzugsweise aus Kunststoff hergestellt ist, weist an einem Verriegelungsarm 41b eine schräge Kante 41c auf, hinter der beide Verriegelungsnasen 35e und 36e verrasten können. Ein anderer Arm 41d des Schwenkhebels 41 ist federnd elastisch ausgebildet und wirkt mit den schrägen Flächen 35d und 36d der Schieber 35, 36 zusammen. Beim Eindrücken eines der Schieber 35, 36, beispielsweise des Schiebers 35, drückt die schräge Kante 35d des Schiebers 35 den federnden Arm 41d derart beiseite, daß der Verriegelungsarm 41b im Uhrzeigersinn um die Achse 41a verschwenkt wird. Die Rastnase 35e fährt dann hinter die schräge Fläche 41c, und der Schieber 35 ist allein von dem Schwenkhebel 41 verrastet. Soll eine Entrastung vorgenommen werden, dann wird der andere Schieber 36 eingeschoben, und die schräge Kante 36d des Schiebers 36 drückt die Rastnase 36e des Schiebers 36 gegen eine Seitenwand 41f des Schwenkhebels 41. Dadurch wird der federnde Arm 41d stärker als zuvor durchgebogen, und die Rastnase 36e drückt den Verriegelungsarm 41d entgegen dem Uhrzeigersinn so weit weg, daß die Rastnase 35e von der schrägen Kante 41c frei kommt. Beide Schieber werden dann mit Hilfe der Federn 35f und 36f in ihre Ausgangslage nach außen zurückgezogen.

Der Schwenkhebel 41 ist mit einem weiteren Arm 41g versehen, der am freien Ende ein Anschlagteil 41h aufweist, dessen Wirkungsweise später erklärt wird.

Wenn durch Eindrücken der Schnellspultaste 31 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 in Eingriff mit dem Zahnrad 23. Das Magnetband wird jetzt mit dem Wickeldorn 21 schnell gewickelt. Wird die andere Schnellspultaste 32 eingedrückt, dann wirkt die Auflauffläche 38 auf den Stift 39 des Bügels 26 ein, wodurch der Stift 28a in Richtung des Pfeiles c und der Stift 29a in Richtung des Pfeiles c' fährt; das Zahnrad 29 kommt dadurch mit dem Zahnrad 13 und das Zahnrad 28 mit dem Zahnrad 22 in Eingriff. Dadurch wird der andere Wickeldorn 20 zum Schnellspulen angetrieben.

Wenn die Kopfplatte 74 in eine Spielstellung (Arbeitslage) gelangt ist, nehmen die Stifte 74c, 74d die vordere gestrichelte Lage in Fig. 1 ein. Diese Lage stimmt überein mit der Lage gemäß Fig. 3. Das Eindrücken der Bedienungsstange 33 bzw. 34 hat jetzt zur Folge, daß über die Auflauffläche 35a, 35b bzw. 36a, 36b die Stifte 74c, 74d und damit die Kopfplatte 74 ein wenig nach hinten in eine Zwischenlage geschoben werden, so daß ein Tonkopf 75 und eine Andruckrolle 79 ein wenig von dem Magnetband angehoben werden während des Schnellspulens.

Ein Bandstop-Detektionsorgan 40 mit einer Scheibe 42 ist über eine Rutschkupplung mit dem Wickeldorn 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, das um ein Lager 47 drehbar ist. Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 48 herum erstreckt sich in einem größeren Abstand eine erhaben aus dem Schaltrad 14 herausstehende, spiralförmige Steuerkurve 51. Auch diese Steuerkurve 51 kann mit dem Stift 49 an dem Schaltelement 46 zusammenwirken, und zwar immer dann, wenn das Bandstop-Detektionsorgan 40 den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Außenseite der Steuerkurve 51 gelangt. Damit wird das Bandstop-Detektionsorgan 40 in seine Betriebsstellung gebracht. Weil die Steuerkurve 51 spiralförmig ist, wird das Schaltelement 46 im Uhrzeigersinn um sein Lager 47 verschwenkt, wodurch das Schaltelement 46 gegen ein Verbindungselement 52 gedrückt wird.

Das Verbindungselement 52 ist ein doppelarmiger Hebel, der um ein Lager 53 schwenkbar ist. Das Verbindungselement 52 ist aufgrund der Wirkung einer nicht dargestellten Feder im Uhrzeigersinn federbelastet.

Der von dem Angriffspunkt des Schaltelementes 46 abgewandte Hebelarm 55 des Verbindungselementes 52 trägt eine nicht dargestellte Herzkurve, die zu einem Rastmechanismus 57 gehört. Zu dem Rastmechanismus 57 gehört auch ein Rasthebel 58, der um eine nicht dargestellte Achse verschwenkbar ist, die parallel zu der Oberfläche des Gestells 1 verläuft. Für die weitere Ausbildung des Rastmechanismus wird auf die DE-OS 34 22 259 (PHD 84-090) verwiesen.

Am Hebelarm 55 ist ein Nocken 71 angeordnet. Dieser Nocken 71 wirkt, wie sich aus den Fig. 2 und 3 ergibt, mit einer Blattfeder 72 sowie einem Teil 72a der Blattfeder 72 zusammen und erstreckt sich durch einen Längsschlitz des Gestells 1 hindurch. Die Blattfeder 72 drückt mit ihrem einen freien Ende gegen eine Halterung 77, die auf einer Kopfplatte 74 um eine Achse 77a schwenkbar gelagert ist. Das andere freie Ende drückt gegen einen Stift 76 der Kopfplatte 74. Diese Kopfplatte 74 trägt in ihrer Mitte einen Tonkopf 75 und rechts des Tonkopfes 75 die Halterung 77, in der eine Andruckrolle 79 gelagert ist. Die Halterung 77 wird in der zurückgezogenen Stellung der Kopfplatte 74 gegen einen Anschlag 74a der Kopfplatte 74 gedrückt.

Die Kopfplatte 74 hat ein abgewinkeltes Ende 80. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 3 der Schwenkarm 16 derart um die Achse 15 verschwenkt, daß das Schaltrad 14 mit dem Spielrad 25 und dem Zahnrad 12 kämmt. Dementsprechend ist in der Stellung nach Fig. 3 die Druckrolle 79 gegen die Tonwelle 10 gedrückt, wobei die Halterung 77 vom Anschlag 74a freigekommen ist.

Die Funktionsweise des Magnetband-Kassettengerätes ist wie folgt: Wird eine Kassette eingelegt, dann fährt eine Auswurfstange 62 aus der Stellung nach Fig. 2 in die Stellung nach Fig. 3. Damit wird ein nicht dargestellter Antriebsschalter geschlossen, und der zentrale Antriebsmotor 3 wird in Betrieb gesetzt. Es dreht sich nun auch die Schwungscheibe 8. Gleichzeitig dreht sich das Zahnrad 12 und das damit kämmende Zahnrad 14.

Durch das Ausfahren der Auswurfstange 62 schwenkt der Rasthebel 56 (Fig. 1) um die nicht dargestellte, zum Gestell 1 parallele Achse, und ein Raststift 65 kommt in den Wirkbereich der Herzkurve.

Weil das Zahnrad 14 nicht in Eingriff ist mit dem Zahnrad 25, dreht der Wickeldorn 21 nicht mit. Die Scheibe 42 (Fig. 1) ist über ihre separate Reibungskupplung mit dem Wickeldorn 21 verbunden und steht damit auch still. Da beim Einbringen der Kassette ein Drehmoment auf das Schaltelement 46 fehlt, weil die Bandwickel noch nicht umlaufen und das Band still steht, bleibt das Schaltelement 46 in der in Fig. 1 dargestellten Stellung stehen und kommt damit mit dem Stift 49 auf die Außenseite der Steuerkurve 41. Das Bandstop-Detektionsorgan ist damit in seiner Betriebslage. Damit macht das Schaltelement 46 eine Bewegung im Uhrzeigersinn und schwenkt das Verbindungselement 52 entgegen dem Uhrzeigersinn. Weil der Rasthebel 58 geschwenkt ist und der Stift 65 der Herzkurve im Wirkbereich ist, umläuft der Stift 65 die Herzkurve und fällt in die Mulde ein. Damit ist das Verbindungselement 52 in einer eingeschwenkten Stellung eingerastet. Durch das Schwenken des Verbindungselementes 52 entgegen dem Uhrzeigersinn bewegt sich der Nocken 71 nach innen und drückt gegen die Blattfeder 72. Die Blattfeder 72 drückt ihrerseits über den Stift 76 und die Halterung 77 gegen die Kopfplatte 74 und schiebt die Kopfplatte 74 in Richtung auf die Tonwelle 10. In der Spiel- oder Arbeitslage liegt die Andruckrolle 79 an der Tonwelle 10 an. Außerdem liegt die Kopfplatte 74 an einem Anschlagstift 78 an (Fig. 3). Dies ist die Spiellage der Kopfplatte, in der bei umlaufendem Motor 3 das Magnetband am Kopf 75 entlanggeführt wird.

Beim Erreichen des Bandendes bleibt das Band stehen. Dadurch wird das Schaltelement 46 mit seinem Stift 49 im Uhrzeigersinn nach außen geschwenkt. Das Verbindungselement 52 schwenkt entgegen dem Uhrzeigersinn. Das Verbindungselement 52 wird bei diesem Bewegen über den Normalhub, der bei eingerasteter Lage vorliegt, in einem Überhub weitergeschwenkt. Der Überhub wird möglich, da der Nocken 71 gegen die Blattfeder 72 an der Kopfplatte 74 drückt über den Hebel 77 und den Stift 76. Damit hat der Nocken 71 einen Ausweichspielraum in Richtung auf die Kopfplatte 74. Bei diesem Überhub fährt der Stift 65 aus der Mulde der Herzkurve heraus, und der Rastmechanismus 57 entrastet. Die Steuerkurve 51 gibt jetzt den Stift 49 frei, so daß das Schaltelement 46 entgegen dem Uhrzeigersinn zurückbewegt werden kann. Dadurch kann das Verbindungselement 52 durch die Kraft der nicht dargestellten Feder verschwenken.

Gleichzeitig fährt der Nocken 71 nach außen, womit die Kopfplatte zurückgefahren wird. Der nicht dargestellte Schalter ist damit geöffnet, und der Motor 3 ist stillgesetzt.

Befindet sich die Kopfplatte 74 in der Spiel- oder Arbeitslage und wird gewünscht, daß schnell gespult wird, dann wird eine der Tasten 31 oder 32 eingedrückt. Wie bereits beschrieben, wird diese Taste in der eingeschobenen Stellung verriegelt mit Hilfe des Verriegelungsarmes 41b. Dabei wird auf die beschriebene Weise der Wickeldorn 20 oder der Wickeldorn 21 schnell angetrieben. Wie dieses Schnellspulen unabhängig von der Wirkung des Bandstop-Detektionsorgans 40 werden kann, ist bereits beschrieben, und zwar dadurch, daß man die jeweils andere Taste 32 oder 31 eindrückt, wobei sich die Verriegelung löst und beide Tasten herausfahren. Da die Kopfplatte noch immer über die Herzkurve in der Spiel- oder Arbeitslage verriegelt ist, wird der Schnellspulvorgang beendet und wieder in den normalen Spielvorgang übergegangen.

Wird dagegen beim Schnellspulen das Bandende oder Bandstop erreicht, dann erfolgt gemäß einer zweiten Entriegelungsmöglichkeit auf noch zu beschreibende Weise über das Bandstop-Detektionsorgan 40 und die Kopfplatte 74 das Entriegeln des als Veriegelungsmechanismus wirkenden Schwenkhebels 41. Das Schaltelement 46 läuft mit dem Stift 49 auf die Schaltkurve 51 auf. Damit kommt das Bandstop-Detektionsorgan 40 in seine Betriebslage. Das Zahnrad 12 ist bestrebt, das Schaltrad 14 weiterzudrehen. Da das Schaltrad 14 auf dem Schwenkarm 16 gelagert ist, veranlaßt das Drehbestreben des Zahnrades 12 damit eine Drehung des Schwenkarmes 16 um die Achse 15 in Richtung eines Pfeiles 90 (Fig. 4). Die von dem Zahnrad 12 auf das Schaltrad 14 ausgeübte Kraft ist dabei mit P1 bezeichnet. Das Verschwenken des Schwenkarmes 16 in Richtung des Pfeiles 90 hat zur Folge, daß der Stift 83 in dem Schlitz 82 eine Kraft P2 auf die Kopfplatte 74 ausübt. Der Abstand des Angriffspunktes des Stiftes 83 auf die Kopfplatte 74 hat einen Abstand h1 gegenüber einer Verbindungslinie 91 der Stifte 74c und 74d. Da der Stift 74d an der Auflauffläche 35b anliegt, veranlaßt die Kraft P1 über den Schwenkarm 16 ein Drehmoment auf die Kopfplatte 74 um den Stift 74d. Das Zahnrad 12 versucht damit, die Kopfplatte 74 um den Stift 74d in Richtung eines Pfeiles 92 zu verschwenken. Dieses Verschwenken hat zur Folge, daß der Stift 74c auf das Anschlagteil 41h drückt mit einer Kraft P3. Der Angriffspunkt, an dem der Stift 74c gegen den Anschlagteil am weiteren Schwenkarm 41g stößt, hat, wie in Fig. 4 angegeben, einen Abstand h2 gegenüber der Schwenkachse 41a des Schwenkhebels 41. Das Anstoßen des Stiftes 74c gegen den Anschlagteil 41h hat damit zur Folge, daß der Schwenkhebel 41 in Richtung eines Pfeiles 93 dreht. Dieses Drehen hat zur Folge, daß die Verriegelungsnase 35e von der schrägen Kante 41c frei kommt. Das hat zur Folge, daß die Tastenstange 33, gezogen von der Feder 35f, in Richtung eines Pfeiles 94 in ihre Ausgangsstellung ausfährt. Auf diese Weise bewirkt das Bandstop-Detektionsorgan 40 über den Schwenkarm 16 und die Kopfplatte 74 unmittelbar das Entriegeln des Schwenkhebels 41. Dieses Entriegeln erfolgt unmittelbar nach dem Überführen des Bandstop-Detektionsorgans 40 in seine Betriebslage. Die Feder 72 wird dabei nur kurzfristig stärker belastet, und es braucht der volle Umlauf des Schaltrades 14 nicht abgewartet zu werden. Erst nach dem Ausfahren der Tastenstange 33 erfolgt nach einem vollen Umlauf des Schaltrades 14 über das Verbindungselement 52 das vollständige Entrasten der Kopfplatte 74 auf bereits beschriebene Weise. Durch das Ausfahren der Tastenstange und das Zurückfahren der Kopfplatte 74 ist das Gerät in seine Ruhelage zurückversetzt. Wird die Kassette nach schnellem Rücklauf nicht herausgenommen, dann wird die Kopfplatte bei drehendem Motor 3 wieder in ihre Betriebslage geschoben, und der Bandbetrieb beginnt von neuem.

**Ansprüche**

1. Schaltmechanismus für ein Magnetband-Kassettengerät mit einer gegenüber dem Magnetband vor und zurück verfahrenden Kopfplatte (74), die in der Arbeitslage vorgefahren verriegelt, wieder entriegelbar und zurückfahrbar ist in eine Ruhelage, und mit einer Bedienungsstange (33, 34) für das Bedienen einer Gerätefunktion, die in der betätigten Lage verriegelbar ist mittels eines Verriegelungsmechanismus (41), wobei ein Bandstop-Detektionsmechanismus (40) für die Entriegelung der Kopfplatte (74) vorgesehen ist, der bei Bandstop in eine Betriebslage gebracht wird, aus der heraus er bereits vor dem Entriegeln der Kopfplatte (74) eine Verstellkraft auf diese ausübt, und wobei der Verriegelungsmechanismus (41) für die Bedienungsstange (33,34) ein mehrarmiger Schwenkhebel (41) ist, wobei einer der Arme (41b) ein Veriegelungsarm ist, dadurch gekennzeichnet, daß der Verriegelungsmechanismus (41) ein als weiterer Arm des Schwenkhebels ausgeführtes Verstellelement (41g) aufweist, das in verriegelter Lage des Veriegelungsmechansmus (41) im Verstellweg der Kopfplatte (74) zwischen Arbeits- und Ruhelage liegt, das infolge der Verstellkraft des Bandstop-Detektionsmechanismus (40) auf die Kopfplatte (74) von einem Betätigungselement (74c) der Kopfplatte (74) angestoßen wird, und das den Schwenkhebel beim Anstozen in eine Entriegelungslage überfürt, wodurch eine Entriegelung des Verriegelungsmechanismus (41) und damit der Bedienungsstange (33, 34) vor dem Entriegeln der Kopfplatte (74) erfolgt.

2. Schaltmechanismus nach Anspruch 2, wobei das Bedienungselement (74c) der Kopfplatte (74) ein Stift auf der Kopfplatte (74) ist, mit dem die Kopfplatte (74) bei Betätigung der Bedienungsstange (33, 34) in eine verriegelte Zwischenstellung zwischen Arbeits- und Ruhelage bewegbar ist, dadurch gekennzeichnet, daß der Stift (74c) in der Zwischenstellung der Kopfplatte (74) angrenzend an einem Anschlagteil (41h) des weiteren Schwenkhebelarmes (41g) liegt.

3. Schaltmechanismus nach Anspruch 3, wobei in der Zwischenstellung der Kopfplatte (74) der Stift (74c) über Federkraft an einer Betätigungskante (35a, 36a) der Bedienungsstange (33, 34) anliegt, dadurch gekennzeichnet, daß der Stift (74c) in der Zwischenstellung zwischen Betätigungskante (35a, 36a) und Anschlagteil (41h) liegt.

4. Schaltmechanismus nach Anspruch 3 oder 4, wobei an der Kopfplatte (74) in einem Abstand voneinander zwei Stifte (74c, 7d) vorgesehen sind, die beide gleichzeitig mit Betätigungskanten (35a, 36a) der Bedienungsstange (33, 34) zusammenwirken, und wobei der Bandstop-Detektionsmechanismus (40) in der Betriebslage versucht, die Kopfplatte (74) um einen der Stifte (74d) zu verdrehen, dadurch gekennzeichnet, daß der weitere Schwenkhebelarm (41g) zur Entriegelung des Verriegelungsmechanismus (41) von dem anderen Stift (74c) angestoßen wird.

## Claims

1. A switching mechanism for a magnetic-tapecassette apparatus comprising a head-mounting plate (74) which is movable towards and away from the magnetic tape and, when latched in its forward operating position, can be released and moved back to a rest position, and an actuating rod (33, 34) for actuating an apparatus function, which rod can be latched in its actuated position by means of a latching mechanism (41), a tape-stop-detection mechanism (40) being provided for the release of the head-mounting plate (74), which mechanism is set to an operating position in the case of tape stoppage, in which position it already exerts an actuating force on the head-mounting plate (74) before said plate is released, and the latching mechanism (41) for the actuating rods (33, 34) being a multi-arm pivotal lever (41), one of the arms (41b) being a latching arm, characterized in that the latching mechanism (41) comprises an actuating element (41g) which is constructed as a further arm (41g) of the pivotal lever and, in the latched position of the latching mechanism (41), is situated in the path of movement of the head-mounting plate (74) between the operating position and the rest position, and as a result of the actuating force exerted on the headmounting plate (74) by the tape-stop-detection mechanism (40) the head-mounting plate (74) is actuated by an actuating element (74c) and the pivotal lever (41) is moved to an unlatching position, so that the latching mechanism (41) and hence the actuating rod (33, 34) are unlatched before the head-mounting plate (74) is unlatched.

2. A switching mechanism as claimed in Claim 2, in which the actuating element (74c) of the head-mounting plate (74) comprises a pin on the head-mounting plate (74), by means of which pin the head-mounting plate (74) is movable to an intermediate position between the operating and the rest position upon actuation of the actuating rod (33, 34), characterized in that the pin (74c) is situated adjacent a stop portion (41h) of the further pivotal-lever arm (41g) in the intermediate position of the head-mounting plate.

3. A switching mechanism as claimed in Claim 3, in which in the intermediate position of the headmounting plate (74) the pin (74c) is positioned against an actuating edge (35a, 36a) of the actuating rod (33, 34) under spring force, characterized in that the pin (74c) is situated between the actuating edge (35a, 36a) and the stop portion (41h) in the intermediate position.

4. A switching mechanism as claimed in Claim 3 or 4, in which the head-mounting plate (74) carries two spaced-apart pins (74c, 74d) which cooperate simultaneously with actuating edges (35a, 36a) of the actuating rods (33, 34) and in which in the operating position the tape-stop-detection mechanism (40) tends to pivot the head-mounting plate (74) about one of the pins (74d), characterized in that the further pivotal-lever arm (41g) is actuated by the other pin (74c) to unlatch the latching mechanism (41).

## Revendications

1. Mécanisme de commutation pour un appareil à cassettes de bande magnétique comportant une plaque porte-tête (74) avançant et reculant par rapport à une bande magnétique, qui, avancée et verrouillée dans la position de travail, peut être à nouveau déverrouillée et ramenée en arrière dans une position de repos, et une tige de manoeuvre (33, 34) pour la commande d'une fonction de l'appareil, qui peut être verrouillée dans la position d'actionnement au moyen d'un mécanisme de verrouillage (41), un mécanisme de détection d'arrêt de bande (40) étant prévu pour le déverrouillage de la plaque porte-tête et étant amené, lors d'un arrêt de la bande, dans une position de fonctionnement à partir de laquelle, dès avant le déverrouillage de la plaque porte-tête (74), il exerce sur celle-ci une force de déplacement, et le mécanisme de verrouillage (41) pour la tige de manoeuvre (33, 34) consistant en un levier pivotant (41) à plusieurs bras, un des bras (41b) étant le bras de verrouillage, caractérisé en ce que le mécanisme de verrouillage (41) comporte un élément de déplacement (41g) ayant la forme d'un autre bras du levier pivotant, qui, dans la position verrouillée du mécanisme de verrouillage (41), se trouve dans le trajet de déplacement de la plaque porte-tête (74) entre sa position de travail et sa position de repos, qui, suite à la force de déplacement du mécanisme de détection d'arrêt de bande (40) sur la plaque porte-tête (74), est attaqué par un élément d'actionnement (74c) de la plaque porte-tête (74) et qui, lors de l'attaque, fait passer le levier pivotant dans une position de déverrouillage grâce à quoi un déverrouillage du mécanisme de verrouillage (41) et, ainsi, de la tige de manoeuvre (33, 34) est effectué avant le déverrouillage de la plaque porte-tête (74).

2. Mécanisme de commutation suivant la revendication 1, dans lequel l'élément de manoeuvre (74c) de la plaque porte-tête (74) est un doigt prévu sur la plaque porte-tête (74), au moyen duquel la plaque porte-tête (74) peut être déplacée, lors de l'actionnement de la tige de manoeuvre (33, 34), dans une position verrouil1ée intermédiaire entre la position de travail et la position de repos, caractérisé en ce que, dans la position intermédiaire de la plaque porte-tête (74), le doigt (74c) est adjacent à un organe de butée (41h) de l'autre bras de levier pivotant (41g).

3. Mécanisme de commutation suivant la revendication 2, dans lequel, dans la position intermédiaire de la plaque porte-tête (74), le doigt (74c) est appliqué sous la force d'un ressort contre un bord d'actionnement (35a, 36a) de la tige de manoeuvre (33, 34), caractérisé en ce que le doigt (74c) se trouve, dans la position intermédiaire, entre le bord d'actionnement (35a, 36a) et l'organe de butée (41h).

4. Mécanisme de commutation suivant la revendication 2 ou 3, dans lequel deux doigts (74c, 74d) sont prévus sur la plaque porte-tête (74) à une certaine distance l'un de l'autre et coopèrent tout deux simultanément avec des bords d'actionnement (35a, 36a) de la tige de manoeuvre (33, 34), et dans lequel le mécanisme de détection d'arrêt de bande (40) tend, dans la position de fonctionnement, à faire pivoter la plaque porte-tête 74 autour d'un des doigts (74d), caractérisé en ce que l'autre bras de levier pivotant (41g) est attaqué par l'autre doigt (74c) en vue du déverrouillage du mécanisme de verrouillage (41).

Fig.1

EP 0 269 155 B1

Fig. 2

EP 0 269 155 B1

Fig. 3

Fig. 4

EP 0 269 155 B1